# EUROPEAN PATENT SPECIFICATION

(11) **EP 4 101 685 B1**
(45) Date of publication and mention of the grant of the patent: **15.10.2025**
(21) Application number: 22177599.2
(22) Date of filing: 07.06.2022
(51) Int. Cl.: B60L 53/16, H01R 31/06

(54) **ADAPTER SYSTEM FOR ELECTRICAL CONNECTION OF A CONNECTOR OF A CABLING TO DIFFERENT CONTACT ARRANGEMENTS OF DIFFERENT CHARGING SOCKETS**
ADAPTERSYSTEM ZUR ELEKTRISCHEN VERBINDUNG EINES STECKERS EINER VERKABELUNG MIT VERSCHIEDENEN KONTAKTANORDNUNGEN VERSCHIEDENER LADEBUCHSEN
SYSTÈME D'ADAPTATEUR DE CONNEXION ÉLECTRIQUE DE CONNECTEUR D'UN CÂBLAGE À DIFFÉRENTS AGENCEMENTS DE CONTACTS DE DIFFÉRENTES PRISES DE CHARGE

(30) Priority: 10.06.2021 DE 102021115051
(43) Date of publication of application: 14.12.2022
(73) Proprietor: TE Connectivity Germany GmbH, 64625 Bensheim (DE)
(72) Inventor: WEYRAUCH, Dirk, 64625 Bensheim (DE); KOWARSCH, Philipp, 64625 Bensheim (DE); HEISS, Dominik, 64625 Bensheim (DE)
(74) Representative: Grünecker Patent- und Rechtsanwälte PartG mbB

(56) References cited:
- DE-U1- 20 109 106
- US-A1- 2015 224 887
- US-A1- 2019 296 452
- US-A1- 2021 013 660

## Description

The present invention relates to an adapter system for the electrical connection of a connector of a cabling to different contact arrangements of different charging sockets along a connection axis.

The adapter system can be used in particular in electric motor-driven transportation devices. Due to the increasing proportion of electrical power generated from renewable energy sources and far-reaching international treaties on the reduction of greenhouse gases, transportation devices powered by electric motors, for example electric vehicles, i.e. motor vehicles with an electric drive, are becoming increasingly important. Electric automobiles are examples of electric motor vehicles which also comprise other motor vehicles for transporting people and goods, such as trains, bicycles, electric scooters, and the like. In general, an electric motor-driven transportation device is understood to mean a motor vehicle for transportation with wheels which is driven by an electric motor as a so-called electric drive and which stores the electrical energy required for its locomotion in rechargeable batteries or cell blocks of existing traction batteries. Such transportation devices driven by electric motors themselves do not emit any relevant pollutants during operation so that they are classified as being emissions-free transportation devices as compared to fuel-driven vehicles.

With regard to the charging of electric motor-driven transportation devices, in particular electric vehicles, almost all charging systems are indeed based on a standard. However, there are different types of charging connectors having different geometries and configurations that have been specially created for electric vehicles. There are therefore different charging options available worldwide which depend on the manufacturer and the model.

The arrangement of the contacts in the charging inputs for plug-in hybrid or electric vehicles is defined by international standards, for example SAE 1772, IEC 62196, GB/T 20234.2 and others. Each of these standards defines a different geometry (spatial arrangement of the contacts relative to each other) of the contact arrangement of a corresponding charging socket. As a result, different charging inputs have to be used in the vehicles for each charging input geometry.

The result of the differences in the charging input geometries is that the wiring/cabling in the transportation devices, which connects the charging socket in the vehicle to its traction battery, must also be specifically adapted and designed for the different contact arrangements. The different configurations, i.e. the number of AC phases, single-phase, two-phase, and three-phase charging exists, further complicate the vehicle's internal cabling and its connection to the contact arrangement of a charging socket. A single-phase charging system, as is often used in the US and Japan, has, for example, three contact elements which are arranged substantially in a triangle and of which one contact element is the ground and two contact elements are the current conductors. In a three-phase system, as is often used in Europe, the contact arrangement of the charging socket comprises five contact elements arranged in two rows, one row with three contact elements and one row with two contact elements. This configuration has the shape of a recumbent "D" and where one contact element is provided for ground and the other four contact elements are current conducting elements.

DE 201 09 106 U1 relates to a universal charger and a universal plug and adapter therefor. The universal charger comprises a universal socket for receiving the universal plug connectable to the terminals of a battery and provides electrical means of predetermined specification for the battery connectable to the plug. A detection and adjustment means detects the specification of the electrical means, when the universal plug is inserted into the socket, and sets the charging conditions for the battery accordingly.

US 2021/0013660 A1 discloses a socket for combined electrical connection and data connection between a motor vehicle and a vehicle component in the external part of the motor vehicle. The socket has a housing with a plug-in opening for connection to a plug of the vehicle component and a cover, a contact carrier with electrical contacts and a data connector mounted in the contact carrier and a connection compartment of the socket for connecting the electrical contacts and the data connector with an electrical grid and a data network of the motor vehicle. The data connector has at least one electrically conductive outer bushing for electrical shielding of the data transmission in the data connector, and a carrier body made from an insulating material and accommodated in the outer bushing the at least one data contact.

US 2019/0296452 A1 discloses an adapter connector having two ends to be mated with a first mating connector and a second mating connector respectively. The adapter connector includes an insulating body and multiple terminals. The insulating body has a first mating section and a second mating section. The first mating section is concavely provided with multiple terminal slots. The second mating section is concavely provided with an insertion space communicated with the terminal slots. The first mating section is mated with the first mating connector. The insertion space accommodates the second mating connector. Each terminal has an elastic contact portion at one end thereof and a flat plate contact portion at the other end thereof. The elastic contact portion is accommodated in a corresponding terminal slot and electrically connected with the first mating connector. The flat plate contact portion is accommodated in the insertion space to be electrically connected with the second mating connector.

US 2015/0224887 A1 discloses a module system for establishing a plurality of variants of a charging device of a vehicle. The module system includes the first module type with a first interface and a second interface, and multiple variants of a second module type, each having a first interface and a second interface. The variants have different second interfaces. The system also comprises multiple variants of a third module type, each having a first interface and a second interface, wherein the variants have different second interfaces. The first interface of the second module type is configured for coupling with the first interface of the first module type. The first interface of the third module type is configured for coupling with the second interface of the first module type. The charging socket can be constructed from a coupling of a variant of the second module type, the first module type, and a variant of the third module type.

The object of the present invention is to provide an adapter system which can connect a connector of a cabling to different contact arrangements of different charging sockets.

The present invention satisfies this object with an adapter system for the electrical connection of a connector of a cabling to different contact arrangements of different charging sockets along a connection axis as defined in claim 1. Preferred embodiments are defined in the dependent claims. The adapter system comprises an adapter housing which, at an end on the socket side, comprises a contact surface extending substantially perpendicular to the connection axis and having contact openings that can be penetrated along the connection axis, and which at an end on the cable side comprises a cabling interface for connecting the connector. The adapter system according to the invention also comprises at least one fastening element for attaching the adapter housing to the charging sockets and is characterized in that the end of the adapter housing on the socket side is attachable in dependence of the contact arrangement to the respective charging socket by way of the at least one fastening element with its contact surface in a predetermined rotational position relative to the connection axis. The inventors have surprisingly found that a single type of connector of an internal cabling can be used to electrically connect to multiple geometries and different configurations of contact arrangements in charging sockets depending on the rotational position in which the contact surface of the adapter housing is attached to the respective charging socket. The adapter system according to the invention therefore makes it possible to connect a universal connector to different charging sockets.

A predetermined rotational position relative to the connection axis means that the contact surface extending substantially perpendicular to the connection axis is rotated about the connection axis, where the contact surface always remains substantially perpendicular to the connection axis during the rotation.

In summary, this means that no specific plug connections of the cabling, for example, of internal cabling of an electric motor-driven transportation device, are required with the adapter system according to the invention for the different contact arrangements of different charging sockets. Instead, the adapter system according to the invention can be interposed between the connector of the cabling and the contact arrangement of the charging socket, which simplifies the manufacturing process.

The invention can be further improved by the following embodiments which are advantageous by themselves and which can be combined with one another at random.

The fastening element is configured as a cap for closing a rear side of the respective charging socket, where the contact openings penetrate the cap. The rear side of a charging socket is to mean the end of the charging socket that is opposite its plugging face and that could also be referred to as a charging outlet. In this embodiment, the fastening element performs two functions. It is used to attach the adapter housing to the respective charging socket in a predetermined rotational position relative to the connection axis. It also closes the charging socket and protects against soiling. This allows for a particularly compact design. Since the rear side of the charging socket is disposed opposite its plugging face, it is not necessary to modify the pin-shaped contact elements of commercially available contact arrangements in charging sockets. The penetrable contact openings allow for simple and reliable contacting of the contact arrangement through the contact openings when the cap-shaped fastening element is closed and attached.

According to a further exemplary embodiment, the cap can comprise at least one connecting element for affixing it to the respective charging socket. The connecting element can be, for example, a latching element, for example, a latching opening or a latching projection, or another type, for example, a fastening tab or pocket. This is preferably a repeatedly detachable connecting element for affixing the cap to the charging socket. The cap can be removed again for maintenance, making the interior of the charging socket accessible. The connecting element can be arranged in a stationary manner on the cap. In this way, the arrangement and alignment of the connecting element can define the rotational position relative to the connection axis with which the contact surface is attached to the respective charging socket. If a complementary connecting element is positioned at the respective point on the rear side of the respective charging socket, then it is ensured in a simple and reliable manner that the end of the adapter housing on the socket side is attached to the charging socket with its contact surface in the predetermined rotational position relative to the connection axis.

The cap comprises an adapter opening which covers the contact surface. A specific rotational position of the contact surface relative to the connection axis can be defined in a simple manner by the shape and/or the positioning of the adapter opening. In the case of rotationally non-symmetrical contact surfaces, such as contact surfaces adapted to the "D-shape" of three-phase plugging faces with, for example, five respective contact openings, the predetermined rotational position can be predefined by a suitably shaped adapter opening in the cap. For example, a rectangular adapter opening only allows for two different orientations. However, a rotational position can also be defined for rotationally symmetrical adapter openings, for example circular adapter openings, by using suitable coding mechanisms, for example, indentations or bulges provided at specific locations of the circular shape.

The adapter housing is configured to be attachable to the cap. In this way, the contact surface can cover the adapter opening, for example, in different orientations. In the case of a substantially rectangular contact surface, the adapter housing is attachable to the cap, for example, in two orientations rotated by 180° with respect to one another. For attachment, the adapter housing can be provided, for example, with assembly devices at its end on the socket side. Assembly devices can be, for example, latching hooks at the end on the socket side projecting in the direction of the connection axis which can engage behind the adapter opening in the cap and in this way affix the adapter housing on the cap. Other ways of attaching the adapter housing to the cap, for example, pressing in or screwing on, or some other type of a positive-fit or positive substance-fit connection are also possible.

According to a non-claimed example disclosed herewith, the adapter housing can be formed integrally at the cap and form an adapter module. In this embodiment, the adapter system comprises at least two adapter modules, the contact surfaces of which are formed on the cap in predetermined different rotational positions relative to the connection axis. Such adapter modules can be produced in a simple manner by injection molding which is particularly advantageous for large production quantities and eliminates an additional assembly step, as would be required in the alternative embodiment of an adapter housing that is attachable to the cap. The cap in the different adapter modules can be identical.

The contact surface in one of the at least two adapter modules can be rotated 180° relative to the connection axis as compared to another of the at least two adapter modules.

Rotational positions rotated by 180° relative to each other make it possible, for example, to contact the common single-phase as well as three-phase connector faces to a universal connector. The inventors have found that the triangular shape with ground and two current-carrying contacts in a single-phase contact arrangement rotated by 180° can be found in a common contact arrangement of a three-phase connector face, namely in the ground as the middle one of the charging socket contact elements in the row of three and the two current-conducting charging socket contact elements in the row of two.

According to a further embodiment, the adapter housing can comprise a locking element for affixing a connected connector in the cabling interface. The locking element can be, for example, a projection or an opening in which a complementary locking element of the connector engages in a positive-fit manner when the connector is seated correctly in the cabling interface. A latching element as a locking element has the advantage of a repeatedly detachable connection.

According to a further embodiment, the locking element can be arranged in a stationary manner relative to the contact surface. In this way, the locking element remains at the same circumferential position of the contact surface for every rotational position. The position of the locking element relative to the contact surface therefore does not change with different rotational positions. In other words, when the contact surface is rotated to a different rotational position, the locking element arranged in a stationary manner relative to the contact surface rotates through the same rotational angle.

For harmonizing the charging socket contact elements of a contact arrangement of a charging socket with the contact openings of the adapter housing, the adapter system can comprise at least one guide element. The guide element is used to adapt a geometry and/or configuration of the contact arrangement. An exemplary guide element is a contact bridge for the electrical connection of at least two contact openings of the contact surface. Such a contact bridge can enable, for example, the electrical connection of a charging socket contact element of a contact arrangement associated with a contact opening to be distributed or branched off to another contact opening of the contact surface. A contact bridge enables the charging current to be distributed from one contact element in the contact arrangement of the charging socket to two contact elements of the connector or vice versa.

Another option for a guide element is a contact redirection for changing the spacing between two charging socket contact elements of a contact arrangement. The contact redirection therefore allows for a change in the geometry of the contact arrangement of the charging socket and its adaptation to the geometry of the vehicle's internal cabling at the connector.

According to one embodiment, the contact bridge can comprise a contact element that projects through one of the at least two contact openings and a coupling element that is electrically conductively connected to the contact element and that is associated with another of the at least two contact openings. The coupling element can be, for example, a coupling opening for receiving a contact pin. The coupling element can comprise connection devices for an electrical and mechanical connection to a charging socket contact element of the contact arrangement. The connection device can be, for example, pressing projections or crimp wings or other elements or zones that enable the coupling element to be connected to a contact element of a contact arrangement, for example, by pressing in, crimping, toxing, welding, soldering, or the like.

In one embodiment, the contact bridge can be formed to be L-shaped, where the contact element of the contact bridge extends substantially perpendicular to the coupling opening. The contact element and the coupling element can be connected to one another by a conduction section. The charging section can be, for example, a conduction strip, i.e. a strip-shaped sheet of conduction metal, where the contact element projects perpendicularly from the conduction strip, for example, at one end of the conduction strip, and the coupling opening is formed therein, for example, at the other, opposite end of the conduction strip. Contact redirection can be configured and set up to be L-shaped in an analogous manner.

An embodiment with two contact bridges makes it possible, in a simple manner, to convert the contact arrangement of a single-phase charging socket with its three contact elements to a connector with a conductor arrangement in the configuration of a conventional three-phase plugging face having five contact elements in "D-shape". Each of the two contact bridges connects one of the contact openings, which are associated with a contact element in the row of two, to the respective outer contact element in the row of three.

According to a further embodiment, the coupling element can be arranged on the surface of the contact surface that is on the socket side. The surface that is on the socket side is the side of the contact surface that points in the direction of the charging socket, i.e. the surface of the contact surface facing away from the cabling interface. When the adapter housing is connected to a charging socket, then the contact elements of the contact arrangement of the charging socket can extend through the contact openings. During attachment, the contact elements exert pressure on the coupling element arranged on the surface on the socket side as they pass through the contact openings and thereby facilitate proper coupling to its coupling element.

The present invention further relates to a parts kit for the electrical connection of a connector of a cabling to different contact arrangements of different charging sockets, for example, of different charging sockets of an electric motor-driven transportation device, along a connection axis as defined in claim 12. The parts kit comprises at least two charging sockets, each of which has a defined plugging face and in which a contact arrangement conforming to the respective plugging face is arranged. The at least two charging sockets are different charging sockets having different contact arrangements. The parts kit further comprises the adapter system according to the invention, as described above. In one embodiment, the parts kit can further comprise a connector of a cabling that is compatible with the cabling interface.

A further aspect of the invention relates to the use of an adapter system of the present invention for the electrical connection of a connector of a cabling to different contact arrangements of different charging sockets, for example, of an electric motor-driven transportation device, along a connection axis, as defined in claim 12. When used according to the invention, the end of the adapter housing on the socket side is attached to the respective charging socket with its contact surface in a predetermined rotational position about to the connection axis.

A further, non-claimed, technical development is a contact arrangement of a charging socket with charging socket contact elements which are arranged in a contact mount, where at least one of the guide elements described above is connected to one of the charging socket contact elements.

The invention shall be explained in more detail below with reference to the drawings using exemplary embodiments, the different features of which can be combined with one another as desired in accordance with the above explanations. In particular, individual features can be added to the existing embodiments in accordance with the above explanations if the effect of these features is necessary for a specific application. Conversely, individual features can be omitted from the existing embodiments if the technical effect of these features is not important in a specific application. Similar, identical, and functionally identical elements in the drawings are provided with identical reference characters to the extent as appropriate,
where:
- Fig. 1:: shows an exemplary and non-claimed adapter system in a perspective front view;
- Fig. 2:: shows the exemplary adapter modules of the adapter system from Figure 1 in a perspective view from the other side;
- Figs. 3 and 4:: show an exemplary embodiment of an adapter system;
- Fig. 5:: shows an exemplary embodiment of a parts kit for the electrical connection of a connector of a cabling with contact arrangements of different charging sockets;
- Fig. 6:: shows perspective views of two different charging sockets which are electrically connected to the connector by way of an adapter system;
- Fig. 7:: shows an exploded perspective view of the parts kit of the charging socket shown on the left-hand side in Figure 6;
- Fig. 8:: shows the exploded view of Figure 7 viewed from its rear side;
- Figs. 9 and 10:: show an exemplary contact arrangement which can be used in the right-hand charging socket of Figure 6;
- Fig. 11:: shows an exemplary embodiment of a contact arrangement in a further embodiment;
- Figs. 12 and 13:: show an exploded perspective view illustrating a further exemplary assembly of the parts kit of Figure 5 for the charging socket shown on the right-hand side in Figure 6.

The principle of the adapter system according to the invention as well as of the parts kit and its components shall be described hereafter with reference to the exemplary embodiments shown in the figures.

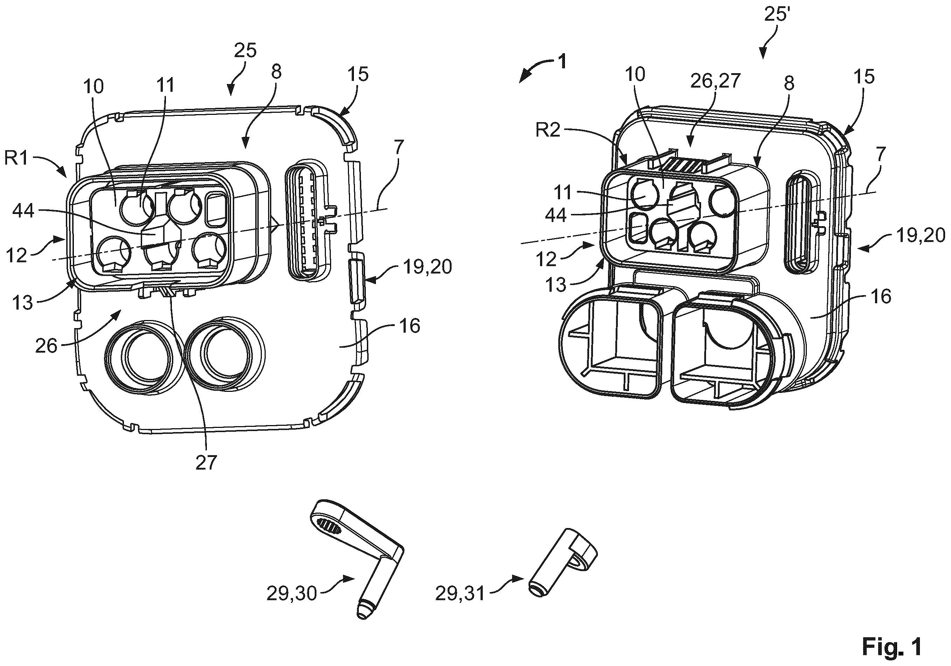

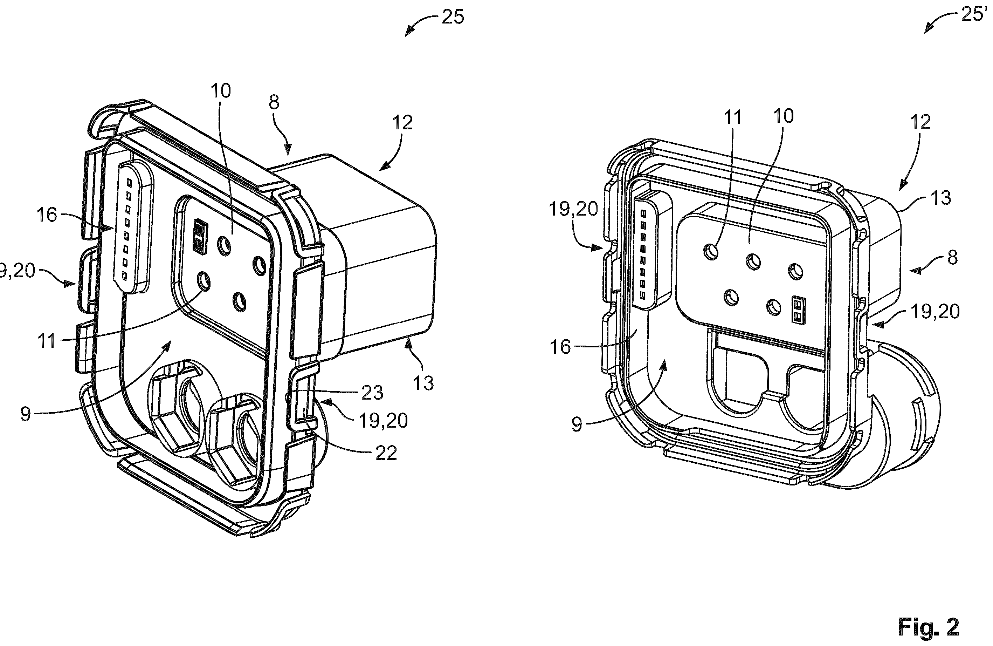

Figures 1 and 2 show a non-claimed example of an adapter system 1 for the electrical connection of a connector 2 of a cabling 3 to different contact arrangements 4 of different charging sockets 5, 6, namely of a three-phase charging socket 5 as well as of a single-phase charging socket 6, along a connection axis 7.

Adapter system 1 comprises an adapter housing 8. Adapter housing 8 is provided with a contact surface 10 on an end 9 on the socket side. Contact surface 10 extends substantially perpendicularly to connection axis 7 and comprises contact openings 11. Contact openings 11 can be penetrated along connection axis 7. Contact surface 11 can therefore be penetrated through contact openings 11 in the direction of connection axis 7 for establishing the electrical connection.

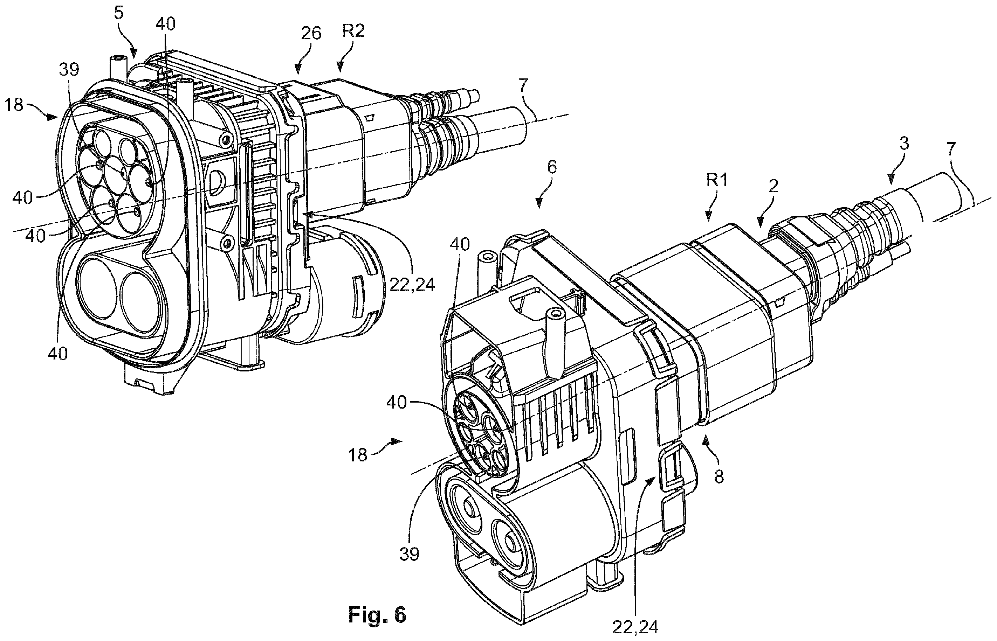

Adapter housing 8 also comprises a cabling interface 13 on an end 12 on the cable side for connecting connector 2. When viewed in the direction of connection axis 7, end 12 on the cable side is disposed at the end of adapter housing 8 opposite end 9 on the socket side. Cabling interface 13 is compatible with connector 2. Connector 2 can be connected to cabling interface 13 of adapter housing 8 in that connector 2 is introduced into cabling interface 13 along connection axis 7. In the mounted state (see e.g. Figure 6), connector contacts 14 are aligned with contact openings 11 along connection axis 7. Connector contacts 14 are, for example, socket contacts which are electrically conductively connected to the conductors of cabling 3.

Adapter system 1 also comprises a fastening element 15 for attaching adapter housing 8 to charging sockets 5, 6. End 9 of adapter housing 8 on the socket side is attached to respective charging socket 5, 6 by way of at least one fastening element 15, which shall be described in more detail hereafter.

In adapter system 1 according to the invention, end 9 of adapter housing 8 on the socket side is attachable in dependence of contact arrangement 4 to respective charging socket 5, 6 by way of fastening element 15 with its contact surface 10 in a predetermined rotational position R1, R2 relative to connection axis 7.As shown in the figures, two rotational positions R1 and R2 are presented. In rotational position R1, contact surface 10 is rotated by 180° compared to rotational position R2, as can be seen clearly in Figure 1 and Figures 3 and 4. The present invention makes it possible in a structurally simple but very effective manner to electrically contact different contact arrangements 4 of different charging sockets 5, 6 with same connector 2 and to thereby connect contact arrangement 4 to an internal battery (not shown), for example, of an electric motor-driven transportation device. All that is required for this is that contact surface 10 of adapter housing 8 be attached in dependence of the contact arrangement to respective charging socket 5, 6 by way of fastening element 15 in a specific rotational position R1, R2.

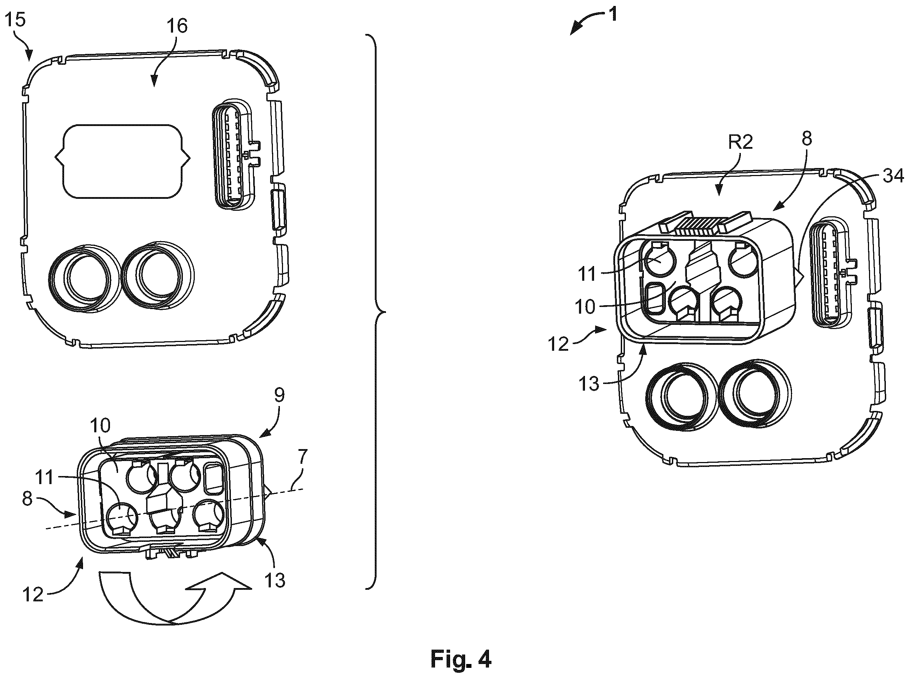

The different rotational positions R1, R2 are obtained by rotating contact surface 10, which extends perpendicular to connection axis 7, about connection axis 7 (as indicated, for example, by the arrow in Figure 4). Contact surface 10 there always remains in the same plane, i.e. contact surface 10 always remains substantially perpendicular to connection axis 7 during rotation.

Fastening element 15 can be configured as a cap 16. A rear side 17 of respective charging socket 5, 6 can be closed with cap 16. Rear side 17 is that end of charging socket 5, 6 which is disposed opposite plugging face 18 of charging socket 5, 6. An external cable for charging the internal battery of the transportation device is connected from the exterior into plugging face 18. For different charging sockets 5, 6, plugging face 18 has characteristic features which conform to contact arrangement 4 used in respective charging socket 5, 6. This is necessary so that the respective contact arrangement 4 can be electrically contacted by the external connector (not shown) through plugging face 18. The closure of rear side 17 of charging socket 5, 6 by way of fastening element 15 configured as a cap 16 shall be explained in more detail hereafter.

Cap 16 can comprise connecting elements 19 for affixing to respective charging socket 5, 6. Connecting elements 19 can comprise latching elements 20 which can establish a positive-fit connection, that is repeatedly detachable, to complementary locking elements 21 of charging sockets 5, 6 in order to affix cap 16 at respective charging socket 5, 6. The cap 16 comprises two latching elements 20 as connecting elements 19. These latching elements 20 are arranged at oppositely disposed points on the circumference of cap 16 and are configured as latching openings 22. Latching openings 22 are formed in a resiliently deflectable tab 23 which, with a corresponding latching projection 24 of charging sockets 5, 6, forms a latch. The latch of latching opening 22 and latching projection 24 can be seen, for example, in Figure 6.

In the adapter system 1 shown in Figures 1 and 2, adapter housing 8 is formed integrally on cap 16. Formed integrally means that adapter housing 8 and cap 16 are formed monolithically from one part, for example, as an injection molded part. This is advantageous for sealing the rear side of charging socket 17 by way of cap 16. An adapter module 25 is formed, adapter housing 8 of which is captively connected to cap 16. The adapter system 1 comprises at least two adapter modules 25, 25'. Contact surfaces 10 of different adapter modules 25 or 25', respectively, are formed at predetermined different rotational positions R1 or R2, respectively, relative to connection axis 7 on cap 16.

Cap 16 in adapter modules 25, 25' could otherwise be identical, apart from the contact surface arranged at different rotational positions R1, R2. As can be seen, for example, in Figure 1, cap 16 can also be provided with various other features, for example, connecting elements for control lines, other interfaces, etc., which are not relevant for the present invention and which shall not be discussed in detail at this point.

In the two adapter modules 25, 25' shown in Figures 1 and 2, contact surface 11 in one adapter module 25 is rotated by 180° relative to connection axis 7 in comparison to other adapter module 25'.

Adapter housing 8 can comprise a locking element 26 for affixing a connected connector 2 in cabling interface 13. Locking element 26 is configured, for example, as a locking projection 27 which projects from the exterior of cabling interface 13 and which provides a positive-fit connection, for example, a latch, to a complementary locking hook 28 which is arranged on connector 2. The latch prevents unintentional detachment of connector 2 from cabling interface 13.

Locking element 26 can be arranged in a stationary manner relative to contact surface 10. Stationary means that the spatial relationship between locking element 26 and contact surface 10 does not change, and locking element 26 is disposed in each rotational position R1, R2 at the same circumferential position of contact surface 10. Locking element 26 therefore co-rotates, as can be seen, for example, in Figures 1 to 4. Locking element 26 also provides a coding which ensures that connector 2 can only be connected to adapter interface 13 in the position required for the electrical connection.

Adapter system 1 can also comprise guide elements 29, for example, contact bridges 30 or contact redirections 31. The geometry, i.e. the spatial arrangement relative to one another or the configuration, i.e. the number of charging socket contact elements 38 in a contact arrangement 4 can therefore be adapted to the arrangement of connector contacts 14 in universal connector 2 where necessary. Exemplary guide elements 29 are shown in Figure 1. What these guide elements 29 look like and how they can be employed shall be explained in more detail hereafter.

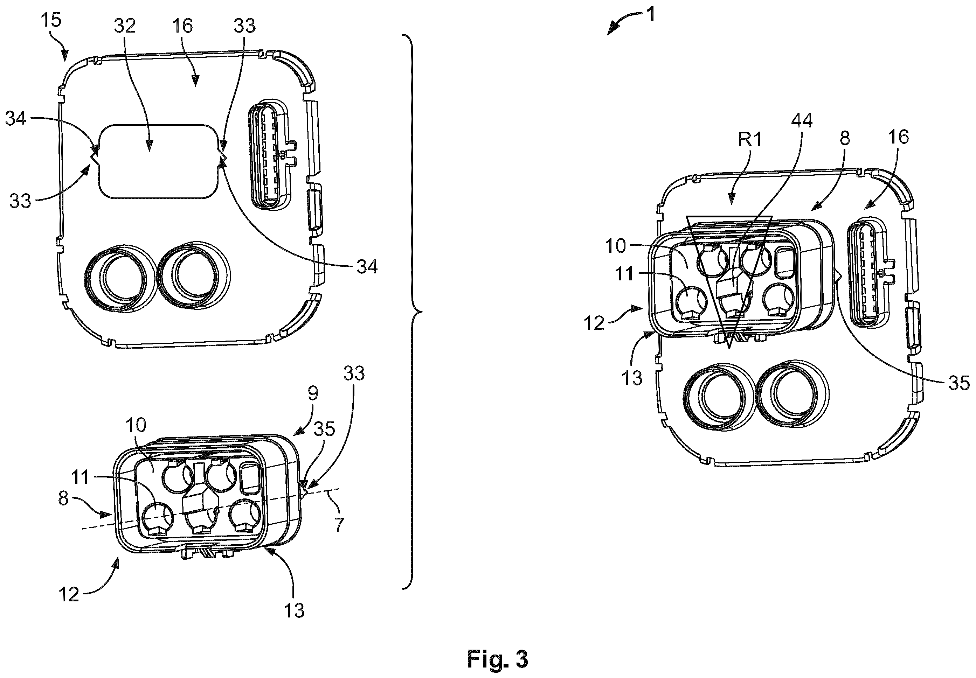

An embodiment of an exemplary adapter system 1 shall be described hereafter with reference to Figures 3 and 4.

In this embodiment, cap 16 comprises an adapter opening 32 which covers contact surface 10. Adapter housing 8 is configured to be attachable to cap 16. Adapter housing 8 can cover adapter opening 32 in different orientations and in this manner provide different rotational positions R1, R2. In the examples shown in Figures 3 and 4, adapter housing 8 is attachable to cap 16 in two orientations rotated by 180° relative to one another.

For attaching adapter housing 8 captively to cap 16, adapter housing 8, in particular at its end 9 on the socket side, and/or cap 16, in particular in the region comprising adapter opening 32, can be provided with assembly devices (not shown). Possible assembly devices are, for example, a catch, a flange with connecting sections, for example, screw openings or welded sections. A positive substance-fit connection by applying adhesive is also possible.

The correct alignment of adapter housing 8 on cap 16 can be specified by alignment members 33. In the exemplary embodiment of Figures 3 and 4, two alignment bays or cavities 34 arranged offset by 180° relative to one another along adapter opening 32 are formed as alignment members 33. These alignment sockets 34 serve to receive an alignment tooth 35 which is arranged on end 9 of adapter housing 8 on the socket side and which fits exactly into alignment bays 34 of adapter opening 32. The predetermined alignment of adapter housing 8 in alignment opening 32 of cap 16 is specified in this way, depending on into which of two alignment sockets 34 alignment tooth 35 is inserted.

In the exemplary embodiment shown in Figures 3 and 4, only two orientations rotated by 180° with respect to one another are possible. This is determined by the rectangular cross sections of adapter housing 8. However, alternative configurations (not shown) are also possible in which contact surface 10 is, for example, circular and therefore rotationally symmetrical, and in which different orientations of adapter housing 8 on cap 16, for example, three orientations rotated by 120° or four rotated by 90° relative to one another, are possible.

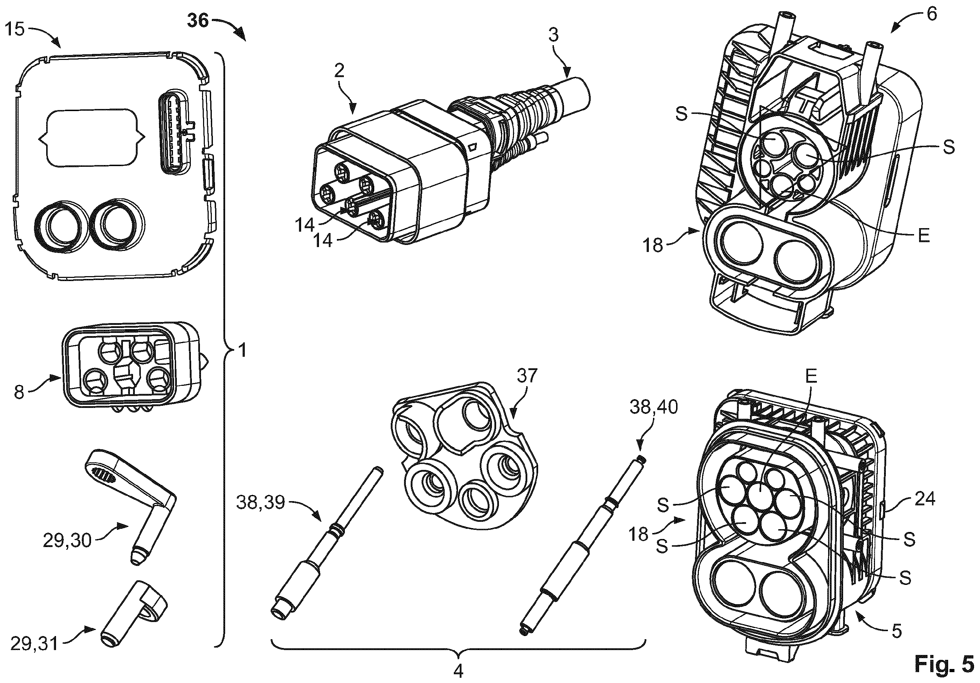

An exemplary parts kit 36 for the electrical connection of connector 2 of cabling 3 to different contact arrangements 4 of different charging sockets 5, 6 is presented below with reference to Figure 5.

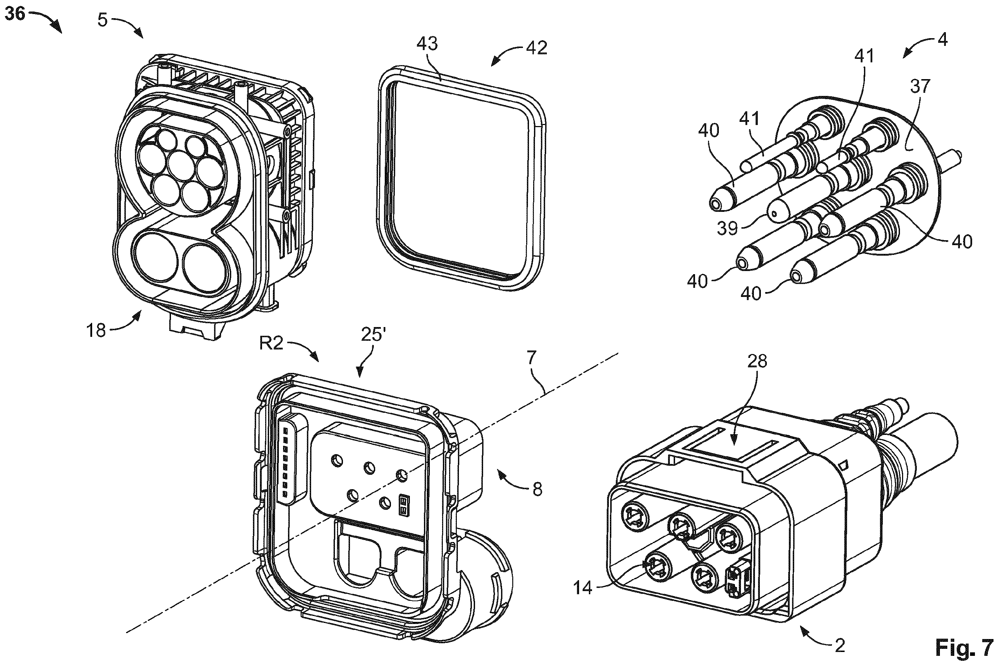

Parts kit 36 comprises an adapter system 1 according to the invention. Figure 5 shows, for example, an adapter system 1 comprising a cap 16 as a fastening element 15 with adapter opening 32 and adapter housing 8 that is attachable therein, as shown in Figures 3 and 4. Adapter system 1 of parts kit 36 from Figure 5 also comprises guide elements 29 which are shown in Figure 1 and shall be explained in more detail hereafter. Parts kit 36 furthermore comprises at least two charging sockets 5, 6, exactly two in the embodiment shown, each of which comprises a defined plugging face 18 and in which a contact arrangement 4 conforming to respective plugging face 18 is arranged. Possible assembled contact arrangements 4 can be seen, for example, in Figures 7 to 13. Only the components of contact arrangement 4, namely a contact mount 37 and charging socket contact elements 38, are shown in Figure 5. In the exemplary embodiment, two different charging socket contact elements 38 are shown. A ground contact 39 and a current contact 40, both of which are substantially pin-shaped, but can differ from one another in terms of their length and in some sections in their diameter.

Parts kit 36 shown in Figure 5 further comprises a connector 2 having connector contacts 14. The geometry and configuration of connector contacts 14 of connector 2 is complementary to the configuration and geometry of contact openings 11 in contact surface 10. In the exemplary embodiment shown, the contact configuration and/or geometry is based on that of a three-phase charging system. This three-phase charging system comprises a total of five contacts or contact openings, respectively, which are arranged in a "D" shape in two rows, one row of three and an adjacent row of two. The middle contact of the row of three is the neutral conductor for ground. The other four are current conductors. Connector 2 that is compatible with cabling interface 13, in particular the former's connector contacts 14, are electrically connected to cabling 3. Only the end section of cabling 3 is indicated schematically. The other end of this cabling leads, for example, to a rechargeable battery of an electric motor-driven transportation device (not shown). Inter alia the use of adapter system 1 and further inventive aspects shall be discussed hereafter with reference to Figures 6 to 13.

It is first shown in Figure 6 what parts kit 36 can look like in the mounted state. In this mounted state, contact arrangement 4 is arranged in corresponding charging socket 5, 6 such that it conforms to respective plugging face 18. One charging socket 5 is a three-phase charging socket type CCS 2. In addition to the five openings in a recumbent D-shape which are circled in Figure 5 for illustration purposes and of which the central middle opening of the row of three is associated with ground contact 39 as ground contact opening 44, mating face 18 of this charging socket 5 comprises two uncircled openings for signal contacts 41. These signal contacts 41 are used to verify the proper electrical connection and to control the charging process.

Other charging socket 6 is type CCS 1. It is a single-phase charging socket 6 which also comprises two signal contacts 41 which correspond to smaller openings disposed in the central circular geometry of the connector face. In addition to a ground contact 39, single-phase charging socket 6 furthermore comprises two current contacts 40 which are associated with openings marked as "S". In connector face 18 of single-phase charging socket 6, the openings for ground E and for current S are positioned at the corners of a triangle.

Respective contact arrangement 4 is arranged to conform with respective plugging face 18 of corresponding charging socket 5, 6 therein. Cap 16 closes rear side 17 of charging socket 5, 6, so that latching openings 22 and latching projections 24 latch together. Connector 2 is arranged in cabling interface 13 and is locked against unintentional removal by way of a locking projection 27 and locking hook 28. The electrical connection has been established in this state. Connector contacts 14 of connector 2 are electrically conductively connected to charging socket contact elements 38 of contact arrangement 4. End 9 of adapter housing 8 on the socket side is there attached in dependence of contact arrangement 4 to respective charging socket 5, 6 by way of fastening element 15, i.e. cap 16 with its contact surface 10 in a predetermined rotational position R1, R2 relative to connection axis 7. This can be realized from the fact that locking elements 26 in three-phase charging socket 5 in Figure 3 point upwardly. In contrast, locking elements 26 at other rotational position R1 on single-phase charging socket 6 are down and therefore cannot be seen.

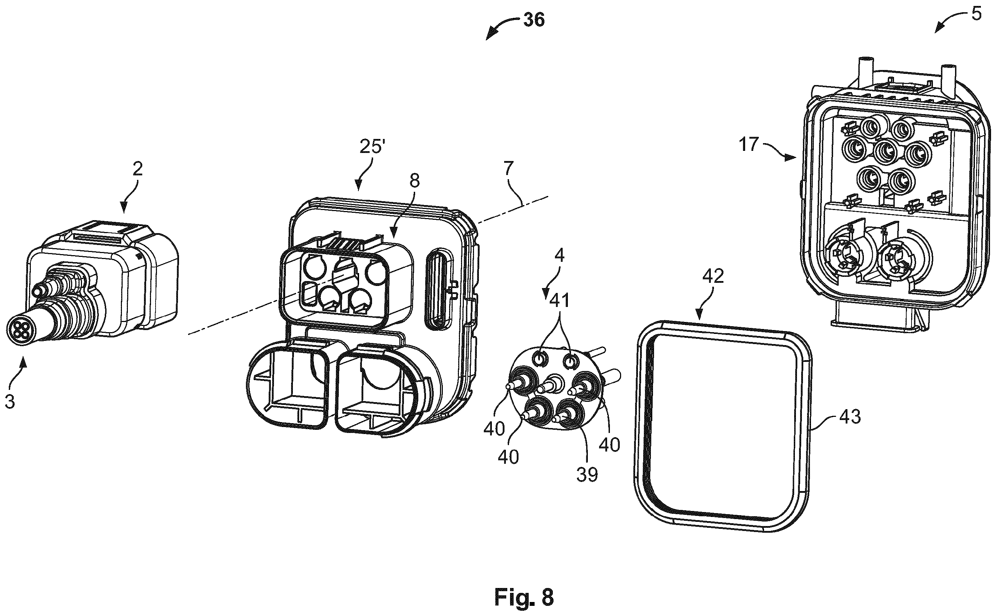

Reference is next made to Figures 7 and 8 which show exploded views of an embodiment of charging socket 5 type CCS 2 shown on the left-hand side in Figure 6. The individual elements of parts system 36 are shown in an exploded view in Figures 7 and 8 and are stretched apart along connection axis 7. Parts system 36 comprises three-phase charging socket 5 with standardized connector face 18, universal connector 2, and, in the embodiment shown, adapter module 25' which is shown in Figure 1 and has already been described in more detail above.

Parts system 36 further comprises a contact arrangement 4 with a contact mount 37. Contact mount 37 is plate-shaped and comprises, as a holding point 45 for the contacts, seven passages, the configuration and geometry of which correspond to the seven openings in plugging face 18 of CCS 2 connector. In this way, central ground contact 39 and four current contacts 40 of the three-phase system are aligned correctly relative to one another and conform with connector face 18. In this embodiment, contact arrangement 4 further comprises two signal contacts 41. Adapter system 1 ensures that end 9 of adapter housing 8 on the socket side is attached to charging socket 5 by way of fastening element 15 with its contact surface 10 in predetermined rotational position R2 relative to connection axis 7. This ensures that universal connector 2 can only be connected to cabling interface 13 in a predetermined orientation in which corresponding connector contacts 14 are properly connected to current contacts 40 and ground contact 39 of contact arrangement 4.

In the embodiments shown in Figures 7 and 8, parts system 36 further comprises a sealing element 42. Sealing element 42 is configured as a sealing ring 43, the shape of which corresponds to the circumference of cap 16 or rear side 17, respectively, of charging socket 5, 6. Closure of rear side 17 of charging socket 5 can be sealed by cap 16 using sealing element 42 and the interior of charging socket 5, 6 with contact arrangement 4 can be protected against soiling.

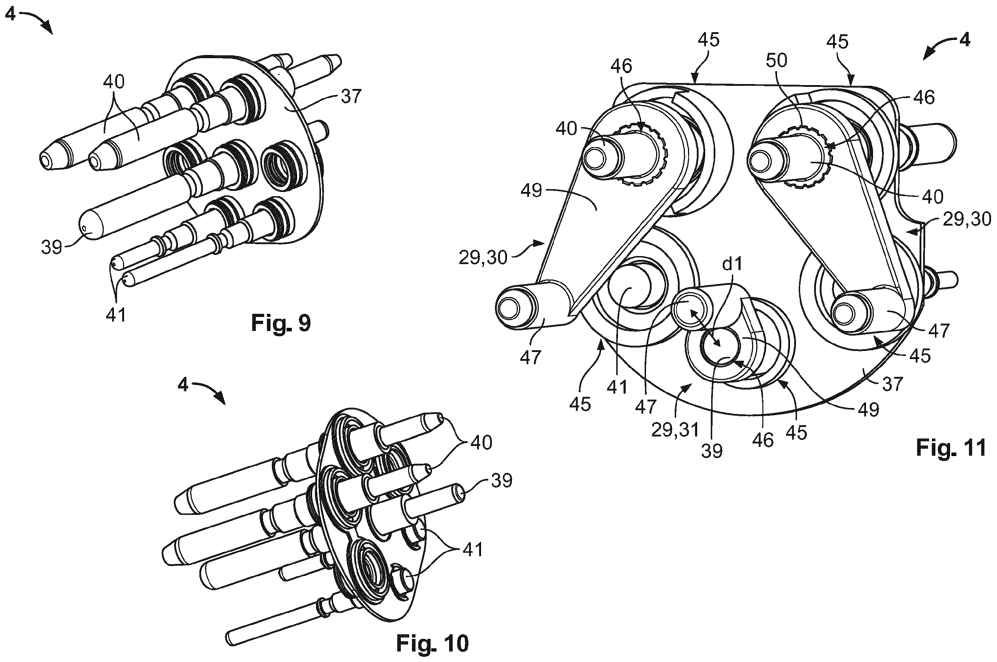

Figures 9 and 10 show a different contact arrangement 4 which can be used in charging socket 6 type CCS 1. This contact arrangement 4 also comprises a contact mount 37 and two signal contacts 41. Charging socket 6 is single-phase and therefore has only two current contacts 40 in addition to one ground contact 39. This geometry and configuration of contact arrangement 4 can be connected to connector 2 only when adapter housing 8 is rotated 180° and contact surface 10 is in rotational position R1 in which connector 2 can only be connected when rotated by 180°. In this rotational position R1, ground contact 39 of connector 2, which is associated with ground contact opening 44 of contact openings 11, is not above the row of two, but below the row of two. Three contact openings 11, which are encircled by a triangle in Figure 3, are thereby disposed in the direction of connection axis 7 in alignment with ground contact 30 and two current contacts 40. In this way, single-phase contact arrangement 4 from Figure 9 of charging socket 6 can be electrically connected to same connector 2 as in the three-phase embodiment of Figures 7 and 8.

Finally, Figures 11 to 13 shall be discussed. A further embodiment of a parts kit 36 is shown there which again uses a differently configured contact arrangement 4. This special contact arrangement 4 is a contact arrangement 4 which can also be regarded to be an independent invention and which shall be explained in more detail below, in particular with reference to Figure 11.

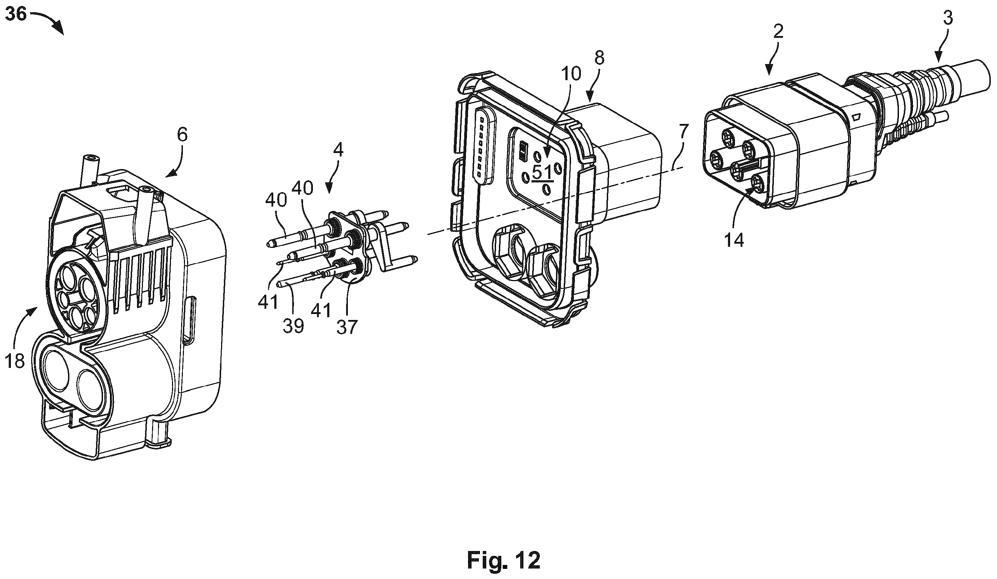

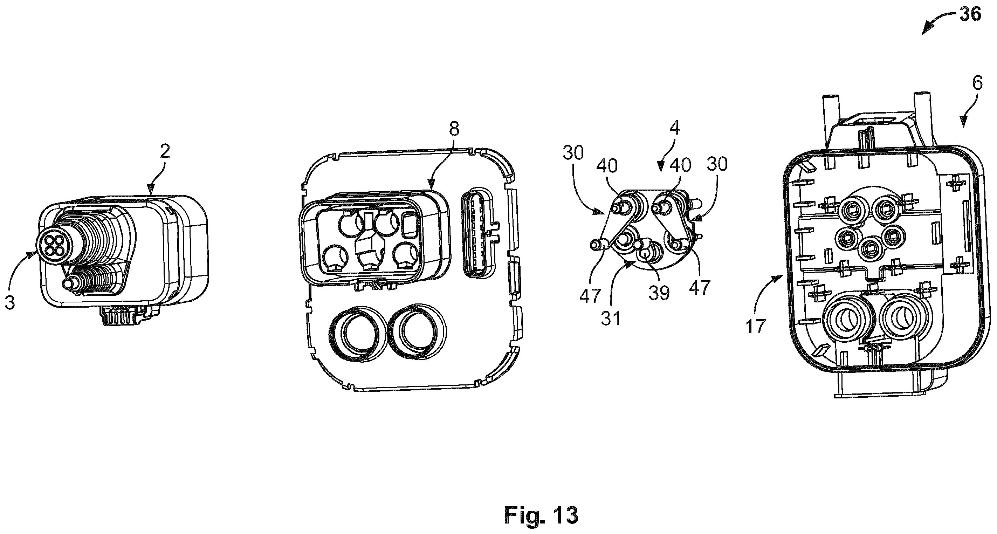

Parts kit 36 shown in Figures 12 and 13 comprises universal connector 2 with its cabling 3 as described in detail above. Charging socket 6 is single-pole, like in the embodiment of Figures 7 and 8.

Contact arrangement 4 of Figures 11 to 13 in its basic structure is of the single-pole type. Contact mount 37 comprises five holding points 45 for arranging a ground contact 39, two current contacts 40, and two signal contacts 41 in the geometry and configuration common to single-phase charging sockets, such as the SAE J1772 or CCS-1 type.

Contact arrangement 4, which is shown in Figures 11 to 13, or adapter system 1 described in these figures, respectively, additionally comprises guide elements 29. In the exemplary embodiment, two contact bridges 30 as well as a contact redirection 31 are used as guide elements 29 of adapter system 1 according to the invention or of contact arrangement 4 according to the invention, respectively.

Guide elements 29 can be used to selectively modify the configuration and/or the geometry of contact arrangement 4 and to properly connect any contact arrangement to a universal connector 2.

Cases in which the contact geometry of contact arrangement 4 does not match the spatial arrangement of connector contacts 14 of connector 2 are conceivable. It may be necessary under certain circumstances that a contact point needs to be moved. In this case, adapter system 1 can comprise a contact redirection 31 for changing the spacing between two contact elements of a contact arrangement 4. This can be seen in Figure 11 for contact redirection 31, which causes the alignment of the ground to be moved by the distance d1.

A contact bridge 30 can be used as a guide element 29 if a different configuration needs to be changed to, for example, by converting a single-pole contact arrangement 4 with one ground contact 39 and only two current contacts 41 to a three-pole system with one ground contact and four current contacts.

For this purpose, a contact bridge could be used in one embodiment (not shown) which electrically connects two contact openings 11 of contact surface 10. The current flowing through one current contact 40 would then be distributed to the two contacts which are associated with two contact openings 11 which are electrically connected to one another by way of contact bridge 30.

In the embodiment shown in Figure 1 and Figures 11 to 13, guide elements 29 comprise a coupling section 49, for example, a coupling opening 46 for receiving a charging socket contact element 38, for example, a current contact 40. In the embodiment shown, guide element 29 also comprises a contact pin 47. The longitudinal axis of contact pin 47 can extend laterally offset relative to coupling opening 46, but substantially perpendicular to the plane that is spanned by coupling opening 46. Coupling element 48, for example, a coupling opening 46, can be electrically conductively connected to contact pin 47 by way of a conduction section 49.

The distance between contact pin 47 and coupling element 48 determines either distance d1 by which a contact 39, 40 of a contact arrangement 4 can be offset by way of a contact redirection 31. In the case of a contact bridge 30, it provides the option of providing additional contact pins 47 in adapter system 1 and establishing contact with connector contacts 14 in order to distribute a charging current evenly over a number of contacts.

As can be seen in Figure 11, a basically single-pole contact arrangement 4 can be modified in this way for a three-pole cabling 3 by way of adapter system 1 according to the invention or a contact arrangement 4 according to the invention, respectively.

Coupling opening 46 forms a coupling element 48 which can be electrically conductively connected to a contact 39, 40 of a contact arrangement 4. Coupling element 48, for example, coupling opening 46, can comprise connection devices 50. Connection devices 50 can be, for example, pressing projections or pressing teeth which are plastically deformable and can establish a positive-fit press connection to contact 39, 40 of a contact arrangement 4. Alternative options of connection devices 50 can be crimp wings or zones for a positive-fit connection, for example, welding, soldering or toxing.

In the exemplary embodiment of Figures 1 and 11, guide element 29 is substantially L-shaped, where contact pin 47 represents one leg and conduction section 49 represents the other leg which extends substantially perpendicular to contact pin 47 and in which coupling element 48, for example, coupling opening 46 is formed, which can be, for example, a strip-shaped element, i.e. a conduction strip, for example, in the form of a wing.

In the exemplary embodiment of adapter system 1 shown in Figures 12 and 13, which comprises guide elements 29 shown in Figure 11, coupling element 28 is arranged on surface 51 of contact surface 10 on the socket side. Surface 51 on the socket side is the surface which points in the direction of charging socket 5, 6, i.e. the side facing away from cabling interface 13.

**Reference characters**

| | | | |
|---|---|---|---|
| 1 | adapter system | 31 | contact redirection |
| 2 | connector | 32 | adapter opening |
| 3 | cabling | 33 | alignment members |
| 4 | contact arrangements | 34 | alignment bay/cavity |
| 5 | charging socket, three-phase | 35 | alignment tooth |
| 6 | charging socket, single-phase | 36 | parts kit |
| 7 | connection axis | 37 | contact mount |
| 8 | adapter housing | 38 | charging socket contact elements |
| 9 | end on the socket side | 39 | ground contact |
| 10 | contact surface | 40 | current contact |
| 11 | contact openings | 41 | signal contact |
| 12 | end on the cable side | 42 | sealing element |
| 13 | cabling interface | 43 | sealing ring |
| 14 | connector contacts | 44 | ground contact opening |
| 15 | fastening element | 45 | holding points |
| 16 | cap | 46 | coupling opening |
| 17 | rear side of the charging socket | 47 | contact pin |
| 18 | plugging face of the charging socket | 48 | coupling element |
| 19 | connecting elements | 49 | conduction section |
| 20 | latching element | 50 | connection device |
| 21 | complementary latching elements | 51 | surface on the socket side |
| 22 | latching opening | | |
| 23 | tab | E | ground |
| 24 | latching projection | R1, R2 | rotational position |
| 25, 25" | adapter module | S | current |
| 26 | locking element | | |
| 27 | locking projection | | |
| 28 | locking hook | | |
| 29 | guide elements | | |
| 30 | contact bridge | | |

## Claims

1. Adapter system (1) for the electrical connection of a connector (2) of a cabling (3) to different contact arrangements (4) of different charging sockets (5, 6) along a connection axis (7), comprising:
- an adapter housing (8) which, at an end (9) on the socket side, comprises a contact surface (10) extending substantially perpendicular to said connection axis (7) and having contact openings (11) that can be penetrated along said connection axis (7), and which, at an end (12) on the cable side, comprises a cabling interface (18) for connecting said connector (2), as well as
- at least one fastening element (15) for attaching said adapter housing (8) to said charging sockets (5, 6),
**characterized in that**
said fastening element (15) is configured as a cap (16) for closing a rear side (17) of said respective charging socket (5, 6), where said contact openings (11) penetrate said cap (16), where said cap (16) comprises an adapter opening (32) which is covered by said contact surface (10), and where said adapter housing (8) is configured to be attachable to said cap (16) with the contact surface (10) covering the adapter opening (32) in at least two different orientations providing different predetermined rotational positions (R1, R2) about said connection axis (7).

2. Adapter system (1) according to claim 1, where said cap (16) comprises at least one connecting element (19) for affixing it to said respective charging socket (5, 6).

3. Adapter system (1) according to claim 1 or 2, where said adapter housing (8) is attachable to said cap (16) in at least two orientations rotated by 180° with respect to one another.

4. Adapter system (1) according to one of the claims 1 to 3, where said adapter housing (8) comprises a locking element (26) for affixing a connected connector (2) in the cabling interface (13).

5. Adapter system (1) according to claim 4, where said locking element (26) is arranged in a stationary manner relative to said contact surface (10).

6. Adapter system (1) according to one of the claims 1 to 5, where said adapter system (1) comprises at least one guide element (29) for modifying a geometry and/or a configuration of said contact arrangement (4)

7. Adapter system (1) according to claim 6, where said guide element (29) comprises a contact bridge (30) for the electrical connection of at least two contact openings (11) of said contact surface (10) and/or a contact redirection (31) for changing the spacing between two charging socket contacts (38).

8. Adapter system (1) according to claim 7, where said contact bridge (30) comprises a guide contact element that projects through one of said at least two contact openings (11) and a coupling element (48) that is electrically conductively connected to said guide contact element and that is associated with another of said at least two contact openings (11).

9. Adapter system (1) according to claim 8, where said coupling element (48) is arranged on said surface (51) of said contact surface (10) on the socket side.

10. Parts kit (36) for the electrical connection of a connector (2) of a cabling (3) to different contact arrangements (4) of different charging sockets (5, 6) along a connection axis (7), comprising:
- an adapter system (1) according to one of the claims 1 to 9, and
- at least two charging sockets (5, 6), each of which comprises a defined plugging face (18) and in which a contact arrangement (4) conforming to said respective plugging face (18) is arranged, said at least two charging sockets (5, 6) being different charging sockets (5, 6) having different contact arrangements (4).

11. Parts kit (36) of claim 10, further comprising a connector (2) of a cabling (3) that is compatible with said cabling interface (13).

12. Use of an adapter system (1) for the electrical connection of a connector (2) of a cabling (3) to different contact arrangements (4) of different charging sockets (5, 6) along a connection axis (7) according to one of the claims 1 to 9, where the adapter housing (8) is attached to the cap (16) with the contact surface (10) covering the adapter opening (32) in one of the at least two orientations, where the at least one fastening element (15) attaches the adapter housing (8) to the charging socket (5, 6) and the cap (16) closes the rear side of said respective charging socket (5, 6), so said end (9) of said adapter housing (8) on the socket side is attached to said respective charging socket (5, 6) with its contact surface (10) in a predetermined rotational position (R1, R2) about said connection axis (7).

## Patentansprüche

1. Adaptersystem (1) zum elektrischen Verbinden eines Steckverbinders (2) einer Verkabelung (3) mit unterschiedlichen Kontaktanordnungen (4) unterschiedlicher Ladeanschlüsse (5, 6) entlang einer Verbindungsachse (7), aufweisend:
- ein Adaptergehäuse (8), das an einem steckdosenseitigen Ende (9) eine im Wesentlichen senkrecht zur Verbindungsachse (7) verlaufende Kontaktfläche (10) aufweist, die entlang der Verbindungsachse (7) durchdringbare Kontaktöffnungen (11) aufweist,
und das an einem kabelseitigen Ende (12) eine Verkabelungsschnittstelle (18) zum Verbinden des Steckverbinders (2) aufweist, sowie
- mindestens ein Befestigungselement (15) zum Befestigen des Adaptergehäuses (8) an den Ladebuchsen (5, 6),
**dadurch gekennzeichnet, dass**
das Befestigungselement (15) als Kappe (16) zum Verschließen einer Rückseite (17) der jeweiligen Ladebuchse (5, 6) ausgebildet ist, wobei die Kontaktöffnungen (11) die Kappe (16) durchdringen, wobei die Kappe (16) eine Adapteröffnung (32) aufweist, die von der Kontaktfläche (10) die Abdeckung aufweist, und wobei das Adaptergehäuse (8) so ausgebildet ist, dass es mit der Kontaktfläche (10) die Adapteröffnung (32) abdeckend in mindestens zwei verschiedenen Ausrichtungen, die unterschiedliche vorbestimmte Drehstellungen (R1, R2) um die Verbindungsachse (7) bieten, an der Kappe (16) befestigbar ist.

2. Adaptersystem (1) nach Anspruch 1, wobei die Kappe (16) mindestens ein Verbindungselement (19) zu ihrer Befestigung an der jeweiligen Ladebuchse (5, 6) aufweist.

3. Adaptersystem (1) nach Anspruch 1 oder 2, wobei das Adaptergehäuse (8) in mindestens zwei um 180° zueinander rotierenden Ausrichtungen an der Kappe (16) befestigbar ist.

4. Adaptersystem (1) nach einem der Ansprüche 1 bis 3, wobei das Adaptergehäuse (8) ein Verriegelungselement (26) zum Befestigen eines angeschlossenen Steckverbinders (2) in der Verkabelungsschnittstelle (13) aufweist.

5. Adaptersystem (1) nach Anspruch 4, wobei das Verriegelungselement (26) relativ zu der Kontaktfläche (10) ortsfest angeordnet ist.

6. Adaptersystem (1) nach einem der Ansprüche 1 bis 5, wobei das Adaptersystem (1) mindestens ein Führungselement (29) zum Verändern einer Geometrie und/oder einer Konfiguration der Kontaktanordnung (4) aufweist.

7. Adaptersystem (1) nach Anspruch 6, wobei das Führungselement (29) eine Kontaktbrücke (30) zur elektrischen Verbindung von mindestens zwei Kontaktöffnungen (11) der Kontaktfläche (10) und/oder eine Kontaktumlenkung (31) zum Verändern des Zwischenraums zwischen zwei Ladebuchsenkontakten (38) aufweist.

8. Adaptersystem (1) nach Anspruch 7, wobei die Kontaktbrücke (30) ein Führungskontaktelement, das durch eine der mindestens zwei Kontaktöffnungen (11) ragt, und ein Kupplungselement (48) aufweist, das elektrisch leitend mit dem Führungskontaktelement verbunden ist und einer anderen der mindestens zwei Kontaktöffnungen (11) zugeordnet ist.

9. Adaptersystem (1) nach Anspruch 8, wobei das Kupplungselement (48) an der Oberfläche (51) der Kontaktfläche (10) auf der Buchsenseite angeordnet ist.

10. Teilesatz (36) zur elektrischen Verbindung eines Steckverbinders (2) einer Verkabelung (3) mit unterschiedlichen Kontaktanordnungen (4) unterschiedlicher Ladesockel (5, 6) entlang einer Verbindungsachse (7), aufweisend:
- ein Adaptersystem (1) nach einem der Ansprüche 1 bis 9, und
- mindestens zwei Ladebuchsen (5, 6), die jeweils eine definierte Steckfläche (18) aufweisen und in denen eine der jeweiligen Steckfläche (18) entsprechende Kontaktanordnung (4) angeordnet ist, wobei die mindestens zwei Ladebuchsen (5, 6) unterschiedliche Ladebuchsen (5, 6) mit unterschiedlichen Kontaktanordnungen (4) sind.

11. Teilesatz (36) nach Anspruch 10, ferner aufweisend einen Steckverbinder (2) einer Verkabelung (3), der mit der Verkabelungsschnittstelle (13) kompatibel ist.

12. Verwendung eines Adaptersystems (1) zum elektrischen Verbinden eines Steckverbinders (2) einer Verkabelung (3) mit unterschiedlichen Kontaktanordnungen (4) unterschiedlicher Ladebuchsen (5, 6) entlang einer Verbindungsachse (7) gemäß einem der Ansprüche 1 bis 9, wobei das Adaptergehäuse (8) an der Kappe (16) mit der Kontaktfläche (10) befestigt ist, die die Abdeckung der Adapteröffnung (32) in einer der mindestens zwei Ausrichtungen bildet, wobei das mindestens eine Befestigungselement (15) das Adaptergehäuse (8) an der Ladebuchse (5, 6) anbringt und die Kappe (16) verschließt die Rückseite der jeweiligen Ladebuchse (5, 6), so dass das Ende (9) des Adaptergehäuses (8) auf der Buchsenseite mit seiner Kontaktfläche (10) in einer vorbestimmten rotierenden Position (R1, R2) um die Verbindungsachse (7) an der jeweiligen Ladebuchse (5, 6) befestigt ist.

## Revendications

1. Système d'adaptateur (1) pour la connexion électrique d'un connecteur (2) d'un câblage (3) sur différents agencements de contact (4) de différentes prises de charge (5, 6) le long d'un axe de connexion (7), comprenant :
- un boîtier d'adaptateur (8) qui, au niveau d'une extrémité (9) sur le côté de prise, comprend une surface de contact (10) qui est étendue sensiblement perpendiculairement audit axe de connexion (7) et qui comporte des ouvertures de contact (11) qui peuvent être pénétrées le long dudit axe de connexion (7), et qui, au niveau d'une extrémité (12) sur le côté de câble, comprend une interface de câblage (18) pour connecter ledit connecteur (2), de même que
- au moins un élément de fixation (15) pour lier ledit boîtier d'adaptateur (8) auxdites prises de charge (5, 6),
**caractérisé en ce que** :
ledit élément de fixation (15) est configuré en tant que capuchon (16) pour fermer un côté arrière (17) de ladite prise de charge respective (5, 6), dans lequel lesdites ouvertures de contact (11) pénètrent ledit capuchon (16), dans lequel ledit capuchon (16) comprend une ouverture d'adaptateur (32) qui est recouverte par ladite surface de contact (10), et dans lequel ledit boîtier d'adaptateur (8) est configuré de manière à pouvoir être lié audit capuchon (16) tandis que la surface de contact (10) recouvre l'ouverture d'adaptateur (32) selon au moins deux orientations différentes qui assurent des positions en rotation prédéterminées différentes (R1, R2) autour dudit axe de connexion (7).

2. Système d'adaptateur (1) selon la revendication 1, dans lequel ledit capuchon (16) comprend au moins un élément de connexion (19) pour sa fixation sur ladite prise de charge respective (5, 6).

3. Système d'adaptateur (1) selon la revendication 1 ou 2, dans lequel ledit boîtier d'adaptateur (8) peut être lié audit capuchon (16) selon au moins deux orientations qui sont tournées de 180° l'une par rapport à l'autre ou les unes par rapport aux autres.

4. Système d'adaptateur (1) selon l'une quelconque des revendications 1 à 3, dans lequel ledit boîtier d'adaptateur (8) comprend un élément de blocage (26) pour fixer un connecteur connecté (2) dans l'interface de câblage (13).

5. Système d'adaptateur (1) selon la revendication 4, dans lequel ledit élément de blocage (26) est agencé d'une manière stationnaire par rapport à ladite surface de contact (10).

6. Système d'adaptateur (1) selon l'une quelconque des revendications 1 à 5, dans lequel ledit système d'adaptateur (1) comprend au moins un élément de guidage (29) pour modifier une géométrie et/ou une configuration dudit agencement de contact (4).

7. Système d'adaptateur (1) selon la revendication 6, dans lequel ledit élément de guidage (29) comprend un pont de contact (30) pour la connexion électrique d'au moins deux ouvertures de contact (11) de ladite surface de contact (10) et/ou un élément de redirection de contact (31) pour modifier l'espacement entre deux contacts de prise de charge (38).

8. Système d'adaptateur (1) selon la revendication 7, dans lequel ledit pont de contact (30) comprend un élément de contact de guidage qui fait saillie au travers de l'une desdites au moins deux ouvertures de contact (11) et un élément de couplage (48) qui est connecté électriquement de façon conductrice audit élément de contact de guidage et qui est associé à une autre desdites au moins deux ouvertures de contact (11).

9. Système d'adaptateur (1) selon la revendication 8, dans lequel ledit élément de couplage (48) est agencé sur ladite surface (51) de ladite surface de contact (10) sur le côté de prise.

10. Kit de parties (36) pour la connexion électrique d'un connecteur (2) d'un câblage (3) sur différents agencements de contact (4) de différentes prises de charge (5, 6) le long d'un axe de connexion (7), comprenant :
- un système d'adaptateur (1) selon l'une quelconque des revendications 1 à 9 ; et
- au moins deux prises de charge (5, 6) dont chacune comprend une face de branchement définie (18) et dans lesquelles un agencement de contact (4) qui est adapté de façon conforme par rapport à ladite face de branchement définie respective (18) est agencé, lesdites au moins deux prises de charge (5, 6) étant des prises de charge différentes (5, 6) qui présentent des agencements de contact différents (4).

11. Kit de parties (36) selon la revendication 10, comprenant en outre un connecteur (2) d'un câblage (3) qui est compatible avec ladite interface de câblage (13).

12. Utilisation d'un système d'adaptateur (1) pour la connexion électrique d'un connecteur (2) d'un câblage (3) sur différents agencements de contact (4) de différentes prises de charge (5, 6) le long d'un axe de connexion (7) selon l'une quelconque des revendications 1 à 9, dans lequel le boîtier d'adaptateur (8) est lié au capuchon (16) tandis que la surface de contact (10) recouvre l'ouverture d'adaptateur (32) selon l'une des au moins deux orientations, dans lequel l'au moins un élément de fixation (15) lie le boîtier d'adaptateur (8) à la prise de charge (5, 6) et le capuchon (16) ferme le côté arrière de ladite prise de charge respective (5, 6) de telle sorte que ladite extrémité (9) dudit boîtier d'adaptateur (8) sur le côté de prise soit liée à ladite prise de charge respective (5, 6) tandis que sa surface de contact (10) est dans une position en rotation prédéterminée (R1, R2) autour dudit axe de connexion (7).
